# EUROPEAN PATENT APPLICATION

(11) **EP 3 549 915 A1**
(43) Date of publication of application: **09.10.2019**
(21) Application number: 18166147.1
(22) Date of filing: 06.04.2018
(51) Int. Cl.: C02F 1/32, A61L 2/10

(54) **FLASH STERILIZATION STRUCTURE OF A WATER DISPENSER**

(71) Applicant: Champ Design Co. Ltd., Kaohsiung City (TW)
(72) Inventor: Wu, Fong-Yu, Kaohsiung City (TW)
(74) Representative: Hauck Patentanwaltspartnerschaft mbB

(57) **Abstract**

A flash sterilization structure of a water dispenser comprising an outer housing (10) having an inlet (11) and an outlet (12), and an Ultra-Violet (UV) lamp (40), and the flash sterilization structure characterized in comprising:
a reflection tube (20) mounted in the outer housing and having a tubular member (21) having
an inner surface being light reflective; and
two opposite ends; and
a flowing chamber (22) defined in the tubular member and through the ends of the tubular member, and communicating with the and the outlet of the outer housing;
a quartz tube (30) mounted in the reflection tube, and having an outer surface facing the inner surface of the tubular member, wherein the UV lamp is mounted in the quartz tube; and
a helical member (50) made of metal, being circular in cross-section, mounted in the flowing chamber of the reflection tube, coiled between the reflection tube and the quartz tube, extending between the two ends of the tubular member of the reflection tube, and abutting on the inner surface of the tubular member and the outer surface of the quartz tube, such that a helical flowing channel (51) is formed between the tubular member and the quartz tube.

## Description

The present invention relates to a flash sterilization structure of a water dispenser, especially to a flash sterilization structure that shrinks a channel for water to flow through, enlarges a distance that the water flows by a helical member, and increase a light reflection area, so as to allow an Ultra-Violet lamp to efficiently sterilize water in a flash.

Nowadays, people pay more and more attention to dietetic hygiene and requirement of quality of drinking water also increases with health awareness. In addition to eliminate heavy metal residues and impurities in water, bacteria and the viruses in the water should also be sterilized.

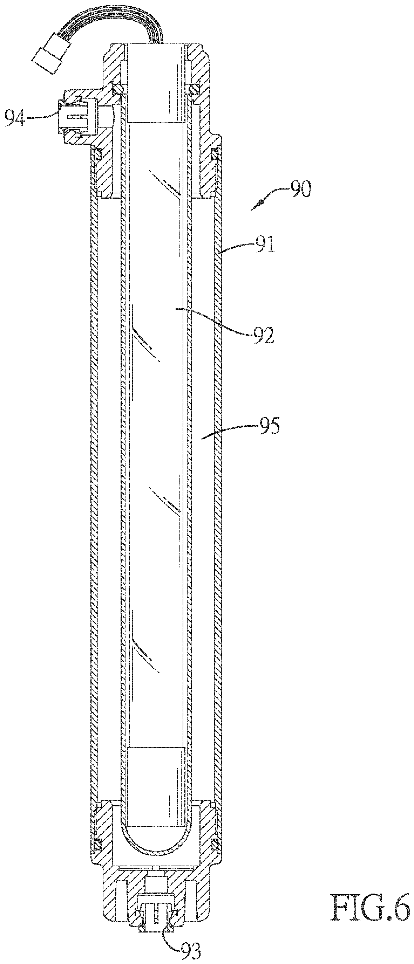

With reference to Fig. 6, a conventional ultraviolet sterilization device 90 has an outer housing 91 and an Ultra-Violet (UV) lamp 92. The outer housing 91 has an inlet 93, an outlet 94 and an inner surface being light reflective. The UV lamp 92 is mounted in the outer housing 91 and irradiates ultraviolet light. A water containing chamber 95 is defined between the outer housing 91 and the UV lamp 92. The conventional ultraviolet sterilization device 90 is installed in a water dispenser. Water flows into the water containing chamber 95 in the outer housing 91 via the inlet 93. The ultraviolet light emitted from the UV lamp 92 the water in the water containing chamber 95.

However, a distance between the outer housing 91 and the UV lamp 92 is so wide that water flow in the conventional ultraviolet sterilization device 90 is large. Moreover, when the water flows into the water containing chamber 95 via the inlet 93, the water flows toward the outlet 94 straightly, thus causing a short flowing path in the conventional ultraviolet sterilization device 90. If time for the ultraviolet light to irradiate the water is short, the water is unable to be completely sterilized. If the time for the ultraviolet light to irradiate the water is long so as to allow the water to be completely sterilized, temperature of the water may be increased due to irradiation of the UV lamp 40, such that the water dispenser having the convention ultraviolet sterilization device 90 is unable to provide the water with room temperature or cold water.

Moreover, when dispensing the water from the water dispenser, the conventional ultraviolet sterilization device 90 do not have enough time to sterilize the water that is replenished into the conventional ultraviolet sterilization device 90. In addition, energy of the ultraviolet light attenuates with distance. Therefore, the water that is closer to the outer housing 91 and the water that is closer to the UV lamp 92 are sterilized in different degrees. Consequently, the water in the water containing chamber 95 is unable to be uniformly sterilized.

The main objective of the present invention is to provide a flash sterilization structure of a water dispenser, so as to solve the problems in the conventional ultraviolet sterilization device, which has to keep irradiating the water in the water containing chamber, do not sterilize the water with enough time such that the water is unable for drinking immediately, and has the problems of unable to uniformly sterilize the water because that the energy of the ultraviolet light attenuates with distance and will be influenced by irregular water flow. The flash sterilization structure has an outer housing, a reflection tube, a quartz tube, an Ultra-Violet (UV) lamp, and a helical member. The outer housing has an inlet and an outlet. The reflection tube is mounted in the outer housing and has a tubular member and a flowing chamber. The tubular member has an inner surface being light reflective and two opposite ends. The flowing chamber is defined in the tubular member and communicates with the inlet and the outlet of the outer housing. The quartz tube is mounted in the reflection tube. The UV lamp is mounted in the quartz tube. The helical member is made of metal, is circular in cross-section, is mounted in the flowing chamber of the reflection tube, is coiled between the reflection tube and the quartz tube, extends between the two ends of the tubular member of the reflection tube, and abuts on the inner surface of the tubular member and the outer surface of the quartz tube, such that a helical flowing channel is formed between the tubular member and the quartz tube.

When the flash sterilization structure is in use, the inlet in the outer housing is connected to an inlet pipe of the water dispenser and the UV lamp is turned on. With the helical flowing channel formed in the flowing chamber of the reflection tube, water flow in the flowing chamber is shrunk. Thus, distance between the UV lamp and the water is shortened. Accordingly, the bacteria and the viruses in the water can be completely killed, so as to sterilize the water in a flash.

The helical flowing channel elongates a distance that the water flows from the inlet to the outlet of the outer housing. Therefore, when the water flows through the helical flowing channel, time for the ultraviolet light to irradiate the water is also increased. Accordingly, the ultraviolet light emitted from the UV lamp has sufficient time to kill the bacteria and the viruses in the water.

The helical member is circular in cross-section and is made of metal that can reflect light. Therefore, when the ultraviolet light strikes the helical member and is scattered, the helical flowing channel is flooded with the ultraviolet light and the water is uniformly irradiated by the ultraviolet light. Accordingly, the bacteria and the viruses in the water can be killed in a flash.
- Fig. 1: is a front view of a flash sterilization structure of a water dispenser in accordance with the present invention;
- Fig. 2: is a front view in partial section of the flash sterilization structure in Fig. 1;
- Fig. 3: is an enlarged front view in partial of the flash sterilization structure in Fig. 2;
- Fig. 4: is an operational enlarged front view in partial section of the flash sterilization structure in Fig. 1;
- Fig. 5: is another operational enlarged front view of the flash sterilization structure in Fig. 2; and
- Fig. 6: is a front view in partial sectional of an ultraviolet sterilization device of a water dispenser in accordance with the prior art.

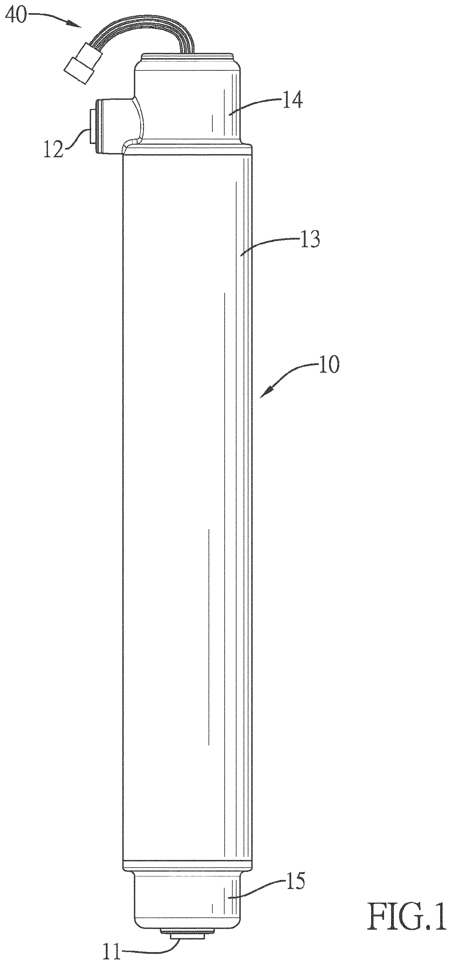

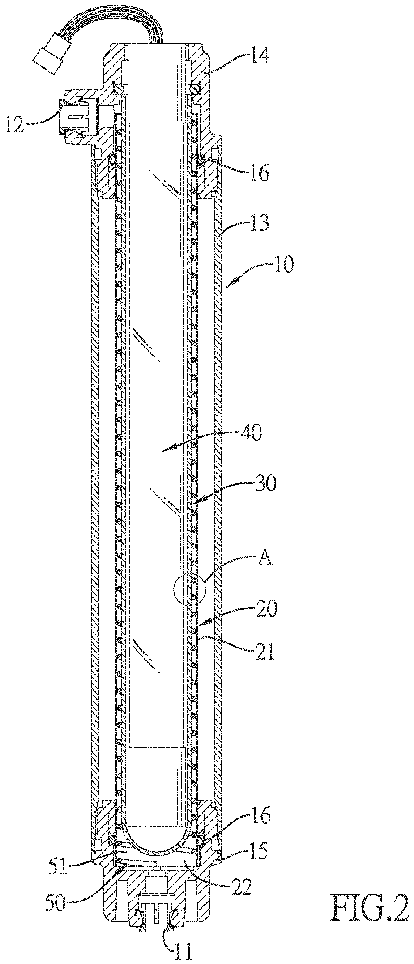

With reference to Figs. 1 to 3, a flash sterilization structure of a water dispenser in accordance with the present invention comprises an outer housing 10, a reflection tube 20, two gaskets 16, a quartz tube 30, an Ultra-Violet (UV) lamp 40, and a helical member 50.

The outer housing 10 has an inlet 11 and an outlet 12 and the outer housing 10 includes a casing 13, an upper cap 14, and a lower cap 15. The casing 13 is hollow and has two opposite ends. The upper cap 14 is mounted on one of the ends of the casing 13. The lower cap 15 is mounted on the other end of the casing 13. The inlet 11 of the outer housing 10 is defined in the lower cap 15. The outlet 12 of the outer housing 10 is defined in the upper cap 14.

The reflection tube 20 is mounted in the outer housing 10 and has a tubular member 21 and a flowing chamber 22. The tubular member 21 has an outer surface, an inner surface, and two opposite ends. The inner surface of the tubular member 21 is applied with light reflective material and is light reflective. One of the ends of the tubular member 21 is connected to and protrudes into the lower cap 15. The other end of the tubular member 21 is connected to and protrudes into the upper cap 14. The flowing chamber 22 is defined in the tubular member 21 and through the ends of the tubular member 21, and communicates with the inlet 11 and the outlet 12 of the outer housing 10.

The gaskets 16 are mounted around the outer surface of the tubular member 21. One of the gaskets 16 is held between the tubular member 21 and the lower cap 15. The other gasket 16 is held between the tubular member 21 and the upper cap 14.

The quartz tube 30 is highly light transparent, is mounted in the reflection tube 20, and has an outer surface. The outer surface of the quartz tube 30 faces the inner surface of the tubular member 21.

The Ultra-Violet (UV) lamp 40 is mounted in the quartz tube 30. In the preferred embodiment, the UV lamp 40 is able to emit ultraviolet light and the ultraviolet light passes through the quartz tube 30.

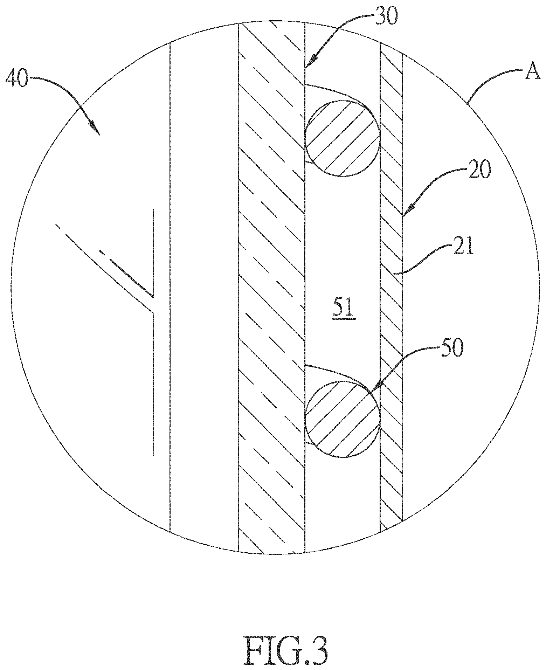

The helical member 50 is made of metal, is mounted in the flowing chamber 22 of the reflection tube 20, is coiled between the reflection tube 20 and the quartz tube 30, extends between the two ends of the tubular member 21 of the reflection tube 20, and abuts on the inner surface of the tubular member 21 and the outer surface of the quartz tube 30, such that a helical flowing channel 51 is formed between the tubular member 21 and the quartz tube 30. As shown in Fig. 3, the helical member 50 is circular in cross-section. Since the helical member 50 is made of metal, the helical member 50 reflects light.

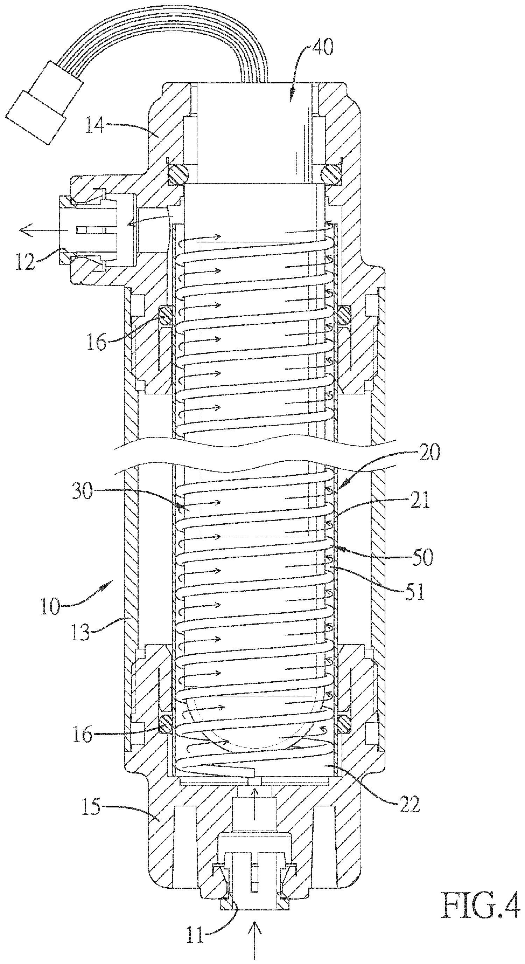

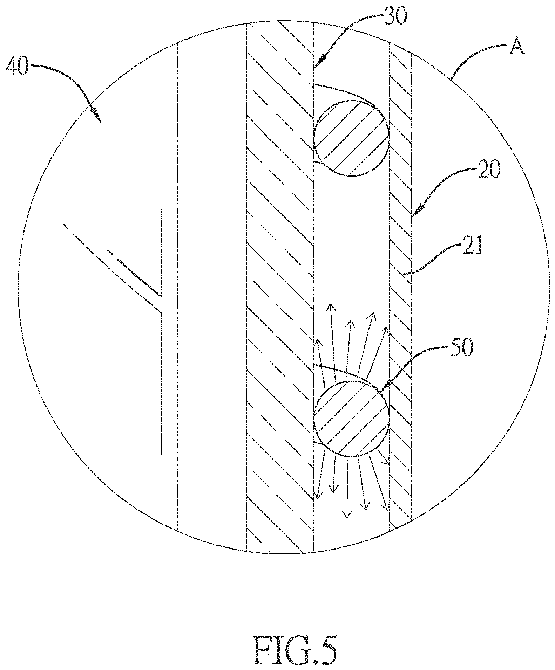

With further reference to Figs. 4 and 5, when the flash sterilization structure is in use, the inlet 11 in the lower cap 15 is connected to an inlet pipe of the water dispenser and the UV lamp 40 is turned on. When water flows into the flowing chamber 22 of the reflection tube 20 of the flash sterilization structure through the inlet pipe, the water hits the helical member 50 and then flows along the helical flowing channel 51 toward the outlet 12 in the upper cap 14. As the water flows along the helical flowing channel 51, the water flows between the reflection tube 20 and the quartz tube 30. The ultraviolet light emitted from the UV lamp 40 passes through the quartz tube 30 and is reflected by the tubular member 21 of the reflection tube 20, so as to irradiate the water in the helical flowing channel 51. By forming the helical flowing channel 51, a distance that the water flows from the inlet 11 to the outlet 12 of the outer housing 10 is elongated. Thus, the ultraviolet light emitted from the UV lamp 40 can fully kill bacteria and viruses in the water. The water that flows out of the flash sterilization structure via the outlet 12 is fully sterilized.

Moreover, the outer housing 10 is thermal insulated. Therefore, when cold water flows through the flash sterilization structure, temperature of the cold water would not be raised due to temperature difference between an exterior of the flash sterilization structure and an interior of the flash sterilization structure. Accordingly, the flash sterilization structure of the present invention can provide cold water that is fully sterilized.

In addition, as shown in Fig. 5, the UV lamp 40 of the flash sterilization structure emits the ultraviolet light. As the ultraviolet light strikes the helical member 50, the helical member 50 also reflects the ultraviolet light. Since the helical member 50 is circular in cross-section, the ultraviolet light that is reflected by the helical member 50 is scattered. Thus, the helical flowing channel 51 is flooded with the ultraviolet light and the water is uniformly irradiated by the ultraviolet light.

The flash sterilization structure of the water dispenser as described has the following advantages.
1. With the helical flowing channel 51 formed in the flowing chamber 22 of the reflection tube 20, water flow in the flowing chamber 22 is shrunk. Thus, distance between the UV lamp 40 and the water is shortened. Accordingly, the bacteria and the viruses in the water can be completely killed, so as to sterilize the water in a flash.
2. The helical flowing channel 20 elongates the distance that the water flows from the inlet 11 to the outlet 12 of the outer housing 10. Therefore, when the water flows through the helical flowing channel 51, time for the ultraviolet light to irradiate the water is also increased. Accordingly, the ultraviolet light emitted from the UV lamp 40 has sufficient time to kill the bacteria and the viruses in the water.
3. The helical member 50 is circular in cross-section and is made of metal that can reflect light. Therefore, when the ultraviolet light strikes the helical member 50 and is scattered, the helical flowing channel 51 is flooded with the ultraviolet light and the water is uniformly irradiated by the ultraviolet light. Accordingly, the bacteria and the viruses in the water can be killed in a flash.

## Claims

1. A flash sterilization structure of a water dispenser comprising an outer housing (10) having an inlet (11) and an outlet (12), and an Ultra-Violet (UV) lamp (40), and the flash sterilization structure **characterized in** comprising:
a reflection tube (20) mounted in the outer housing (10) and having a tubular member (21) having
an inner surface being light reflective; and
two opposite ends; and
a flowing chamber (22) defined in the tubular member (21) and through the ends of the tubular member (21), and communicating with the inlet (11) and the outlet (12) of the outer housing (10);
a quartz tube (30) mounted in the reflection tube (20), and having an outer surface facing the inner surface of the tubular member (21), wherein the UV lamp (40) is mounted in the quartz tube (30); and
a helical member (50) made of metal, being circular in cross-section, mounted in the flowing chamber (22) of the reflection tube (20), coiled between the reflection tube (20) and the quartz tube (30), extending between the two ends of the tubular member (21) of the reflection tube (20), and abutting on the inner surface of the tubular member (21) and the outer surface of the quartz tube (30), such that a helical flowing channel (51) is formed between the tubular member (21) and the quartz tube (30).

2. The flash sterilization structure as claimed in claim 1, wherein
the outer housing (10) includes
a casing (13) being hollow and having two opposite ends;
an upper cap (14) mounted on one of the ends of the casing (13); and
a lower cap (15) mounted on the other end of the casing (13);
one of the ends of the tubular member (21) is connected to the lower cap(15); the other end of the tubular member (21) is connected to the upper cap (14); the inlet (11) of the outer housing (10) is defined in the lower cap (15); and the outlet (12) of the outer housing (10) is defined in the upper cap (14).

3. The flash sterilization structure as claimed in claim 2, wherein
one of the ends of the tubular member (21) protrudes into the lower cap (15); the other end of the tubular member (21) protrudes into the upper cap (14); and
the flash sterilization structure further comprises two gaskets (16), the two gaskets (16) is mounted around an outer surface of the tubular member (21), one of the gaskets (16) is held between the tubular member (21) and the lower cap (15), and the other gasket (16) is held between the tubular member (21) and the upper cap (14).

4. The flash sterilization structure as claimed in claim 1, 2, or 3, wherein the inner surface of the tubular member (21) is applied with light reflective material.
